# EUROPÄISCHE PATENTANMELDUNG

(11) **EP 0 848 510 A2**
(43) Veröffentlichungstag der Anmeldung: **17.06.1998**
(21) Anmeldenummer: 97121585.0
(22) Anmeldetag: 08.12.1997
(51) Int. Cl.: H04B 10/00

(54) **Leitungslose Signalübertragung bei Automatisierungsgeräten**

(30) Priorität: 13.12.1996 DE 19651991
(71) Anmelder: SIEMENS AKTIENGESELLSCHAFT, 80333 München (DE)
(72) Erfinder: Glöckner, Knut, 09113 Chemnitz (DE); Meier, Frank-Günter, 9212 Limbach-Oberfrohna (DE)

(57) **Zusammenfassung**

Bei einer Steuerungs- und/oder Überwachungseinrichtung mit zumindest einem Senderelement (SE) bzw. einem Empfängerelement (EE) auf einer der ersten Bauteileinheit (EBE) und einer davon potentialgetrennten Signalverarbeitungseinrichtung (SV) auf einer von der ersten Bauteileinheit (EBE) getrennten zweiten Bauteileinheit (ZBE) ist ein dem Senderelement (SE) bzw. Empfängerelement (EE) zugeordnetes Empfängerelement (EE') bzw. Senderelement (SE') auf der zweiten Bauteileinheit (ZBE) plazierbar, so daß Senderelement (SE) und zugeordnetes Empfängerelement (EE) gleichzeitig die elektrische und die mechanische Schnittstelle zwischen erster (EBE) und zweiter Bauteileinheit (ZBE) bilden, so daß mit der zweiten Bauteileinheit (ZBE) erste Bauteileinheiten (EBE) unterschiedlichster Konfiguration jederzeit lösbar verbindbar sind.

## Beschreibung

Die vorliegende Erfindung betrifft eine Steuerungs- und/oder Überwachungseinrichtung nach dem Oberbegriff des ersten Anspruches.

Steuerungs- und/oder Überwachungseinrichtungen der eingangs genannten Art sind heutzutage weit verbreitet. Zur Erfassung von Prozeßsignalen ist der jeweilige Sensor mit einem Eingangsstromkreis verbunden. Zur Potentialtrennung wird der Eingangsstromkreis in einen ersten Eingangsstromkreis und einen zweiten Eingangsstromkreis aufgeteilt, wobei die Schnittstelle durch einen Optokoppler gebildet ist. Der erste Eingangsstromkreis ist mit dem Sensor verbunden. Der zweite Eingangsstromkreis ist mit einer Signalverarbeitungseinrichtung verbunden. Analoge Verhältnisse gelten für den Ausgangsstromkreis. Auch der Ausgangsstromkreis ist zur Potentialtrennung in einen ersten Ausgangsstromkreis und einen zweiten Ausgangsstromkreis aufgeteilt. Die Schnittstelle wird wiederum durch einen Optokoppler gebildet. Der zweite Ausgangsstromkreis ist mit einer Signalverarbeitungseinrichtung verbunden, während der erste Ausgangsstromkreis mit einem im Prozeß befindlichen Aktor verbunden ist.

Die Signalverarbeitungseinrichtung erfaßt über den jeweiligen Eingangsstromkreis einen Zustand des gesteuerten und/oder überwachten technischen Prozesses und/oder löst über den jeweiligen Ausgangsstromkreis Zustandsänderungen im gesteuerten und/oder überwachten Prozeß aus. Da die Anzahl der zu erfassenden Zustände genauso wie die Anzahl der beeinflußbaren Aktoren des technischen Prozesses vom jeweiligen technischen Prozeß abhängt, variiert auch die Zahl der Eingangsstromkreise bzw. die Zahl der Ausgangsstromkreise. Im Stand der Technik ist es daher bekannt, die Signalverarbeitungseinrichtung auf einer von der ersten Bauteileinheit getrennten zweiten Bauteileinheit anzuordnen. Auf der ersten Bauteileinheit befinden sich dann die für den jeweiligen konkreten Anwendungsfall benötigten, d. h. die auf den zu steuernden und/oder zu überwachenden technischen Prozeß abgestimmten Anzahlen von Eingangs- bzw. Ausgangsstromkreisen. Die erste Bauteileinheit ist in diesem Falle mechanisch lösbar mit der zweiten Bauteileinheit, z. B. über Steckverbinder, elektrisch leitend verbunden.

Nachteilig bei der bekannten Lösung für Steuerungs- und/oder Überwachungseinrichtungen der eingangs genannten Art ist jedoch, daß in der Steuerungs- und/oder Überwachungseinrichtung stets zwei Schnittstellenebenen vorhanden sind, wobei die erste Schnittstellenebene durch die in den Eingangsstromkreisen bzw. Ausgangsstromkreisen angeordneten Optokoppler gebildet ist und wobei die zweite Schnittstellenebene durch den zwischen erster Bauteileinheit und zweiter Bauteileinheit angeordneten Steckverbinder gebildet ist.

Die Aufgabe der vorliegenden Erfindung besteht daher darin, einerseits bei Beibehaltung der Potentialtrennung zwischen der Prozeßperipherie und der Signalverarbeitungseinrichtung und andererseits unter Beibehaltung der leichten Austauschbarkeit bzw. Konfigurierbarkeit der jeweiligen Eingangs- bzw. Ausgangskanäle eine dieser Schnittstellen zu eliminieren.

Die Aufgabe wird durch die Merkmale des Hauptanspruches gelöst. Die bei bekannten Lösungen die erste Schnittstellenebene bildenden Optokoppler, bei denen jeweils in einem Bauteil ein Sender- und ein zugehöriges Empfängerelement angeordnet ist, sind als separate Sender- bzw. Empfängerelemente ausgebildet, wobei jeweils eines der beiden Elemente auf der ersten Bauteileinheit angeordnet ist und das verbleibende korrespondierende Element auf der von der ersten Bauteileinheit getrennten zweiten Bauteileinheit angeordnet ist.

Vorzugsweise ist mit dem Senderelement eine elektromagnetische Welle oder ein elektromagnetisches Feld ausstrahlbar und mit dem Empfängerelement eine elektromagnetische Welle oder ein elektromagnetisches Feld detektierbar. Die Senderelemente können z.B. eine elektromagnetische Welle im für das menschliche Auge sichtbaren Bereich oder eine elektromagnetische Welle im IR-Bereich ausstrahlen. In jedem Falle erfolgt mit derartigen Sender- bzw. Empfängerelementen eine echte Potentialtrennung zwischen Senderelement und Empfängerelement bzw. dem an das Senderelement angeschlossenen Stromkreis und dem an das Empfängerelement angeschlossenen Stromkreis. Dabei führt der erstgenannte Stromkreis z.B. ein Potential von 24 V und der verbleibende Stromkreis z.B. ein Potential von 5 V. Weiter ist es mit derartigen Sender- bzw. Empfängerelementen möglich, die erste Bauteileinheit von der zweiten Bauteileinheit beabstandet anzuordnen.

Bei einer weiteren vorteilhaften Ausgestaltung der Steuerungs- und Überwachungseinrichtung gemäß der Erfindung ist das Senderelement und das Empfängerelement jeweils als Spule mit darin angeordnetem ferromagnetischen Element ausgebildet, wobei die jeweils auf der ersten Bauteileinheit bzw. der zweiten Bauteileinheit plazierten ferromagnetischen Elemente so angeordnet und ausgebildet sind, daß sie einen nahezu geschlossenen Kreis bilden. Auch in diesem Fall ist die beabstandete Anordnung von erster Bauteileinheit und zweiter Bauteileinheit möglich, wobei zwischen den beiden Schenkeln der jeweils U-förmig ausgebildeten ferromagnetischen Elemente ein Spalt verbleibt. Dieser Spalt behindert den magnetischen Fluß im durch die ferromagnetischen Elemente gebildeten Kreis jedoch nur so geringfügig, daß die Signalaussendung mit Hilfe des als Senderelement wirkenden ferromagnetischen Elementes bzw. die Signaldetektion mit Hilfe des als Empfängerelement wirkenden ferromagnetischen Elementes nur unwesentlich beeinträchtigt wird.

Bei einer weiteren Ausgestaltung der erfindungsgemäßen Steuerungs- und/oder Übertragungseinrichtung sind sowohl Senderelement als auch Empfängerelement als einander gegenüberliegend angeordnete Platten eines Plattenkondensators ausgebildet. Die Signalübertragung erfolgt in diesem Falle analog zur zuvor beschriebenen Ausgestaltung mit induktiven Senderelementen bzw. Empfängerelementen durch kapazitive Sender- bzw. Empfängerelemente.

Auf der ersten Bauteileinheit ist z.B. eine Digitaleingabeschaltung zur Detektion binärer Signale, die von Sensoren eines externen technischen Prozesses geliefert werden, oder eine Digitalausgabeschaltung, die binäre Signale an Aktoren und/oder Stellglieder eines externen Prozesses ausgibt, angeordnet. Mit einer gemäß der Erfindung ausgestalteten Steuerungs- und/oder Überwachungseinrichtung ist es dann vorteilhafterweise möglich, den auf der von der zweiten Bauteileinheit mit der Signalverarbeitungseinrichtung getrennten ersten Bauteileinheit angeordneten Digitalausgabeschaltkreis bzw. Digitaleingabeschaltkreis jederzeit von der zweiten Bauteileinheit mechanisch zu lösen, um etwa eine defekte zweite Bauteilheit schnellstmöglichst auszutauschen.

Wenn auf der zweiten Bauteileinheit sowohl ein Senderelement als auch ein Empfängerelement plazierbar ist, ist es vorteilhafterweise möglich, dieser zweiten Bauteileinheit eine erste Bauteileinheit zuzuordnen, auf der entweder ein Empfängerelement mit einem Digitalausgabeschaltkreis oder ein Senderelement mit einem Digitaleingabeschaltkreis angeordnet ist. Die Flexibilität der erfindungsgemäßen Steuerungs- und Überwachungseinrichtung ist damit entscheidend erhöht, da der Anwender der zweiten Bauteileinheit dieser auf einer ersten Bauteileinheit sowohl eine Digitaleingabe als auch eine Digitalausgabe zuordnen kann.

Wenn in einem elektrischen Gerät zumindest zwei der erfindungsgemäßen Steuerungs- und/oder Überwachungseinrichtungen plazierbar sind, ergibt sich damit ein flexibel im Hinblick auf die jeweiligen Anwendungsgebiete konfigurierbares Automatisierungsgerät, dem auf einer entsprechenden Anzahl von ersten Bauteileinheiten die jeweils durch den zu steuernden bzw. zu überwachenden technischen Prozeß vorgegebene Anzahl von Digitaleingaben bzw. Digitalausgaben zuordenbar ist.

Weitere Vorteile und erfinderische Einzelheiten ergeben sich aus der nachfolgenden Beschreibung eines Ausführungsbeispiels anhand der Zeichnungen und in Verbindung mit den Unteransprüchen. Dabei zeigen
- FIG 1: eine Steuerungs- und/oder Überwachungseinrichtung mit zwei Schnittstellenebenen,
- FIG 2: eine Steuerungs- und/oder Überwachungseinrich tung mit nur einer Schnittstellenebene und
- FIG 3: eine Steuerungs- und/oder Überwachungseinrichtung mit nur einer Schnittstellenebene zwischen erster und zweiter Bauteileinheit, wobei auf der ersten Bauteileinheit eine Digitalausgabeschaltung und eine Digitaleingabeschaltung angeordnet ist.

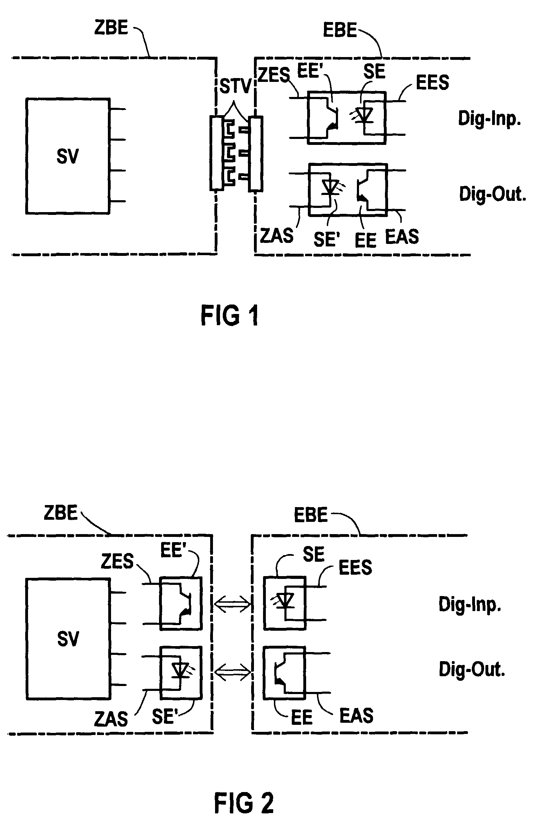

FIG 1 zeigt die im Stand der Technik bekannte Lösung einer Steuerungs- und/oder Überwachungseinrichtung, wobei auf einer von einer zweiten Bauteileinheit ZBE getrennten ersten Bauteileinheit EBE z.B. ein Digitalausgabeschaltkreis oder ein Digitaleingabeschaltkreis angeordnet ist. Die Verbindung zwischen erster Bauteileinheit EBE und zweiter Bauteileinheit ZBE erfolgt z.B. über einen Steckverbinder STV. Die Signalübertragung und -anpassung zwischen Digitaleingabestromkreis bzw. Digitalausgabestromkreis und der Signalverarbeitungseinrichtung SV erfolgt dabei über Optokoppler, mit den darin angeordneten Senderelementen SE, SE', bzw. Empfängerelementen EE, EE'.

Das Senderelement SE des Optokopplers der Digitaleingabe ist in einem ersten Eingangsstromkreis EES angeordnet. Das Empfängerelement EE dieses Optokopplers ist in einem zweiten Eingangsstromkreis ZES angeordnet, wobei die beiden Eingangsstromkreise EES, ZES durch den Optokoppler potentialgetrennt sind, so daß beide Eingangsstromkreise EES, ZES potentialverschieden sein können. Analog dazu befindet sich das Empfängerelement EE des Optokopplers der Digitalausgabe in einem ersten Ausgangsstromkreis EAS; das Senderelement SE' dieses Optokopplers ist in einem zweiten Ausgangsstromkreis ZAS angeordnet. Beide Ausgangsstromkreise EAS und ZAS sind ebenfalls potentialgetrennt und können daher gleichfalls potentialverschieden sein.

Der zweite Eingangsstromkreis ZES sowie auch der zweite Ausgangsstromkreis ZAS ist über den Steckverbinder STV mit entsprechenden, in FIG 1 nicht dargestellten Kontakten des sich auf der zweiten Bauteileinheit ZBE fortsetzenden zweiten Eingangsstromkreises ZES bzw. zweiten Ausgangsstromkreises ZAS verbunden, wobei beide Stromkreise ZES, ZAS in in FIG 1 nicht dargestellter Weise an eine Signalverarbeitungseinrichtung SV herangeführt sind.

Die Signalverarbeitungseinrichtung SV ist z.B. ein Mikroprozessor SV mit einem diesem zugeordneten Speicherbereich, wobei der Mikroprozessor SV z.B. über Kommunikationsmittel Daten von einer übergeordneten Einheit empfängt und Daten an diese übergeordnete Einheit übermittelt. Aufgrund der von der übergeordneten Einheit empfangenen Daten, schaltet die Signalverarbeitungseinrichtung SV z.B. eine bestimmte Digitalausgabe auf logisch 1, beziehungsweise übermittelt den logischen Zustand einer Digitaleingabe an die übergeordnete Einheit.

Wichtig ist noch, festzustellen, daß bei der im Stand der Technik bekannten Lösung die Potentialtrennung mittels Optokoppler erfolgt, wobei ein Optokoppler ein vorkonfektioniertes Bauteil ist, das in einem Gehäuse stets ein Senderelement und ein korrespondierendes Empfängerelement aufweist.

FIG 2 zeigt die erfindungsgemäße Steuerungs- und/oder Überwachungseinrichtung mit nur noch einer Schnittstellenebene. Ein erster Eingangsstromkreis EES sowie ein erster Ausgangsstromkreis EAS sind gemäß dem Ausführungsbeispiel auf einer ersten Bauteileinheit EBE angeordnet. Im ersten Eingangsstromkreis EES befindet sich ein Senderelement SE, im ersten Ausgangsstromkreis EAS befindet sich ein Empfängerelement EE.

Auf der von der ersten Bautetleinheit EBE getrennten Bauteileinheit ZBE befinden sich dem Senderelement SE gegenüberliegend angeordet ein Empfängerelement EE' und ein dem Empfängerelement EE gegenüberliegend angeordnetes Senderelement SE'. Das Empfängerelement EE' ist im zweiten Eingangsstromkreis ZES, das Senderelement SE' im zweiten Ausgangsstromkreis ZAS angeordnet.

Der zweite Eingangsstromkreis ZES sowie der zweite Ausgangsstromkreis ZAS ist erneut, wie bereits bei FIG 1 beschrieben, in nicht dargestellter Weise mit der Signalverarbeitungseinrichtung SV verbunden, wobei die Signalverarbeitungseinrichtung SV grundsätzlich die gleichen Aufgaben wahrnimmt und damit eine entsprechende Funktonalität bietet, wie die entsprechende Signalverarbeitungseinrichtung SV gemäß FIG 1.

Die Signalübertragung zwischen Senderelement SE, SE' und Empfängerelement EE', EE erfolgt über eine elektromagnetische Welle oder ein elektromagnetisches Feld. Im Ausführungsbeispiel ist das Senderelement SE, SE' als Diode ausgebildet, die eine elektromagnetische Welle im Infrarotbereich ausstrahlt. Entsprechend ist das Empfängerelement EE, EE' als Detektor zur Detektion einer elektromagnetischen Welle im Infrarotbereich ausgebildet. Die einander zugeordneten Sender- und Empfängerelement SE, EE' bzw. EE, SE' sind jeweils auf unterschiedlichen, beabstandeten Bauteileinheiten EBE, ZBE angeordnet.

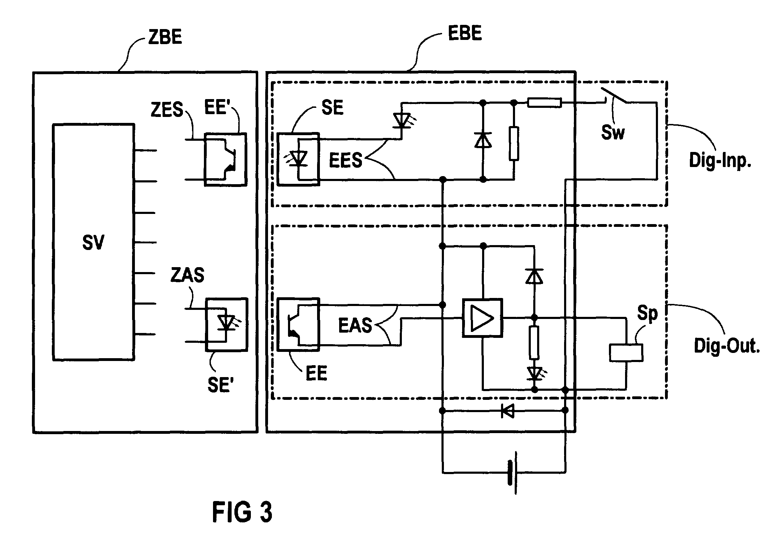

In FIG 3 ist auf der ersten Bauteileinheit EBE eine Digitaleingabe mit dem ersten Eingangsstromkreis EES und dem darin angeordneten Senderelement SE sowie eine Digitalausgabe mit dem ersten Ausgangsstromkreis EAS und dem darin angeordneten Empfängerelement EE dargestellt. Selbstverständlich kann auf der ersten Bauteileinheit EBE anstelle der Digitaleingabe auch eine Analogeingabe und/oder anstelle der Digitalausgabe auch eine Analogausgabe angeordnet sein. Die an die Digitalausgabe angeschlossene Prozeßperipherie, die z.B. ein Aktor oder ein Stellglied sein kann, ist exemplarisch als Schützspule Sp dargestellt. Die an die Digitaleingabe angeschlossene Prozeßperipherie, die ein Sensor im weitestens Sinne sein kann, ist exemplarisch als Schalter Sw dargestellt. Auf der zweiten Bauteileinheit ZBE ist für die Digitaleingabe dem Senderelement SE gegenüberliegend das Empfängerelement EE' angeordnet, das sich im zweiten Eingangsstromkreis ZES befindet. Für die Digitalausgabe ist auf der zweiten Bauteileinheit ZBE dem Empfängerelement EE gegenüberliegend das Senderelement SE' angeordnet, das sich im zweiten Ausgangsstromkreis ZAS befindet. Der zweite Eingangsstromkreis ZES und der zweite Ausgangsstromkreis ZAS sind in in FIG 3 nicht dargestellter Weise mit der Signalverarbeitungseinrichtung SV verbunden.

Mit der zweiten Bauteileinheit ZBE ist mindestens eine erste Bauteileinheit EBE kombinierbar. Für jede erste Bauteileinheit EBE ist auf der zweiten Bauteileinheit ZBE zumindest ein Bereich mit zumindest entweder einem Senderelement SE' oder einem Empfängerelement EE' vorgesehen. In diesem Bereich ist die erste Bauteileinheit zu positionieren.

Die Signalverarbeitungseinrichtung SV ist mit einer übergeordneten Einheit, z.B. der Zentraleinheit einer speicherprogrammierbaren Steuerung, über Kommunikationsmittel, beispielsweise über einen Feldbus, verbindbar. Die Signalverarbeitungseinrichtung SV gibt über diese Kommunikationsmittel die von den auf den ersten Bauteileinheiten EBE beispielsweise angeordneten Digitaleingaben empfangenen Eingangswerte an die übergeordnete Einheit weiter. Analog steuert die Signalverarbeitungseinrichtung SV auch die auf den ersten Bauteileinheiten EBE beispielsweise angeordneten Digitalausgaben entsprechend der von der übergeordneten Einheit empfangenen Daten auf logisch 1 oder logisch 0.

Zur effektiven Steuerung und/oder Überwachung eines technischen Prozesses weist die zweite Bauteileinheit ZBE der erfindungsgemäßen Steuerungs- und/oder Überwachungseinrichtung zumindest einen speziellen Bereich für erste Bauteileinheiten EBE auf, in dem eine der zweiten Bauteileinheit ZBE zuordenbare erste Bauteileinheit EBE plazierbar ist. Dieser mindestens eine Bereich für erste Bauteileinheiten EBE ist entweder durch Anordnung eines Empfängerelementes EE' in diesem Bereich für eine auf einer ersten Bauteileinheit EBE angeordneten Digitaleingabe vorkonfektioniert, oder aber durch Anordnung eines Senderelementes SE' für eine auf einer ersten Bauteileinheit EBE angeordnete Digitalausgabe vorkonfektioniert.

Wenn in dem mindestens einen Bereich jedoch sowohl ein Senderelement SE' als auch ein Empfängerelement EE' vorgesehen ist, ist mit der zweiten Bauteileinheit ZBE sowohl eine erste Bauteileinheit EBE mit einer Digitalausgabe als auch eine erste Bauteileinheit EBE mit einer Digitaleingabe kombinierbar.

Der Signalverarbeitungseinrichtung SV wird für jede zugeordnete erste Bauteileinheit EBE übermittelt, welche Konfiguration, d.h. Digitaleingabe oder Digitalausgabe bzw. Digitalausgabe und Digitaleingabe, auf dieser ersten Bauteileinheit EBE vorhanden ist. Die Übermittlung der Konfiguration erfolgt z.B. über eine nicht dargestellte mechanische Kodiervorrichtung, die auf der zweiten Bauteileinheit ZBE angeordnet ist und beim Positionieren der ersten Bauteileinheit EBE betätigt wird.

Für den Fall, daß auf der ersten Bauteileinheit EBE weder eine Digitaleingabe noch eine Digitalausgabe, sondern z.B. eine sogenannte intelligente Peripherieeinheit mit z.B. einem eigenen Mikroprozessor oder einem ASIC angeordnet ist, kann beim Positionieren der ersten Bauteileinheit EBE, oder beim Einschalten der Versorgungsspannung für die zweite Bauteileinheit ZBE mit Hilfe eines definierten Protokolls, dessen Signale zwischen Senderelement SE bzw. SE' und Empfängerelement EE bzw. EE' übertragen werden, ein sogenannter Identlauf initiiert werden, in dessen Verlauf die auf der ersten Bauteileinheit EBE angeordnete intelligente Peripheriebaugruppe, der auf der zweiten Bauteileinheit ZBE angeordneten Signalverarbeitungseinrichtung SV ihre Konfiguration übermittelt.

Für den Fall, daß die erfindungsgemäße Steuerungs- und/oder Überwachungseinrichtung als Modul eines modularen Automatisierungsgerätes, z.B. als Modul eines dezentralen Peripheriegerätes ausgebildet ist, sind diesem Automatisierungsgerät eine Vielzahl von als einzelne Module ausgebildeten Steuerungs- und/oder Überwachungseinrichtungen mit jeweils mindestens einer ersten EBE und zweiten Bauteileinheit ZBE zuordenbar. Die jeweiligen Signalverarbeitungseinrichtungen SV der zweiten Bauteileinheit ZBE sind dabei z.B. über einen zentralen Bus des Automatisierungsgerätes verbunden. Zustände des technischen Prozesses, die z.B. über die im technischen Prozeß angeordneten Sensoren mittels auf der ersten Bauteileinheit EBE angeordneter Eingangsstromkreise ermittelt wurden, werden über die Signalverarbeitungseinrichtung SV an eine intelligente Einheit eines zentralen Moduls des Automatisierungsgerätes übermittelt. Diese intelligente Einheit des zentralen Moduls des Automatisierungsgerätes, die z.B. in einem speziellen Modul des Automatisierungsgerätes angeordnet ist, kommuniziert z.B. über Kommunikationsmittel mit übergeordneten Einheiten, z.B. einer Zentraleinheit einer speicherprogrammierbaren Steuerung.

## Patentansprüche

1. Steuerungs- und/oder Überwachungseinrichtung, insbesondere Modul eines modularen Automatisierungsgerätes, mit
- zumindest einem Senderelement (SE) und/oder einem Empfängerelement (EE) auf einer ersten Bauteileinheit (EBE) und
- einer davon potentialgetrennten Signalverarbeitungseinrichtung (SV) auf einer von der ersten Bauteileinheit (EBE) getrennten zweiten Bauteileinheit (ZBE)
**dadurch gekennzeichnet,** daß ein dem Senderelement (SE) zugeordnetes Empfängerelement (EE') und/oder ein dem Empfängerelement (EE) zugeordnetes Senderelement (SE') auf der zweiten Bauteileinheit (ZBE) plazierbar ist.

2. Steuerungs- und/oder Überwachungsungseinrichtung nach Anspruch 1, **dadurch gekennzeichnet,** daß mit dem Senderelement (SE, SE') eine elektromagnetische Welle oder ein elektromagnetisches Feld ausstrahlbar ist und mit dem Empfängerelement (EE, EE') eine elektromagnetische Welle oder ein elektromagnetisches Feld detektierbar ist.

3. Steuerungs- und/oder Überwachungsungseinrichtung nach Anspruch 1 oder 2, **dadurch gekennzeichnet,** daß auf der zweiten Bauteileinheit (EBE) ein Senderelement (SE) und ein Empfängerelement (EE) plazierbar ist.
